# EUROPÄISCHE PATENTANMELDUNG

(11) **EP 1 657 055 A1**
(43) Veröffentlichungstag der Anmeldung: **17.05.2006**
(21) Anmeldenummer: 05024482.1
(22) Anmeldetag: 10.11.2005
(51) Int. Cl.: B32B 21/04, B32B 21/06, B44C 5/04, E04F 15/02

(54) **Beschichtete Ausbauplatte aus mehrlagigem Holzwerkstoff**

(30) Priorität: 12.11.2004 DE 202004017559 U
(71) Anmelder: Institut für Holztechnologie Dresden gGmbH, 01217 Dresden (DE)
(72) Erfinder: Devantier, Bernd, Dr., 01156 Dresden (DE); Blüthgen, Lars, 01936 Neukirch (DE)
(74) Vertreter: Kaufmann, Sigfrid

(57) **Zusammenfassung**

Die Erfindung bezieht sich auf die Beschichtung eines lastaufnehmenden, plattenförmigen Ausbauelementes bestehend aus mehreren zusammengepreßten Lagen aus Holzwerkstoff. Ihre Anwendung bietet sich besonders als Bodenplatte im Nutzfahrzeug- und Containerbau an, aber auch im Gerüst-, Bühnen-, Festzelt- und Gebäudebau sowie im Schank- und Schaustellerwagenbau. Die erfindungsgemäße Beschichtung besteht aus mit Wärme härtbaren Harzen imprägnierten, unifarbenen oder oberflächige Applikationen (5) aufweisenden Papieren, die entweder als kompaktes plattenförmiges Halbzeug, z. B. HPL, als kompakte Materialbahn von der Rolle, z. B. CPL, oder aus einzeln aufgelegten Blättern oder Schichten derart imprägnierter Papiere von der Rolle, die mit dem phenolharzbeleimten Holzwerkstofflagen in einem Arbeitsgang verpreßt sind, ausgeführt ist.

## Beschreibung

Die Erfindung bezieht sich auf die Beschichtung eines lastaufnehmenden, plattenförmigen Ausbauelements bestehend aus mehreren zusammengepreßten Lagen aus Holzwerkstoff.

Solche Ausbauelemente finden besonders als Bodenplatte im Nutzfahrzeug- und Containerbau Anwendung; weitere vorteilhafte Einsatzmöglichkeiten bietet der Gerüst-, Bühnen-, Festzelt- und Gebäudebau, aber auch der Schank- und Schaustellerwagenbau.

Es ist seit langem üblich, Ausbauelemente mit tragender Funktion, z. B. im Nutzfahrzeugbau, aus Sperrholz herzustellen, wobei aufgrund der vergleichsweise guten physikalisch-mechanischen Kennwerte, insbesondere der relativ hohen Biegesteifigkeit, Buche als Werkstoff bevorzugt eingesetzt wird. Dem steht allerdings die hohe Masse der Buchenholzsperrhölzer als wesentlicher Nachteil gegenüber, so daß zunehmend deutlich leichtere Verbundwerkstoffe im Hinblick auf notwendige Gewichtsreduzierungen, die besonders für rollende/transportierende Systeme von großer ökonomischer Bedeutung sind, eingesetzt werden.

Es ist bekannt, sowohl Sperrhölzer als auch mehrschichtige Verbundaufbauten mit Kunstharzen oder Lacken zu beschichten. Die Kunstharzschicht wird dabei häufig durch eine Phenol- oder Melamin-Harzschicht gebildet. Dazu wird üblicher Weise zuvor die Oberfläche des Trägerwerkstoffs in einem separaten Arbeitsgang geschliffen

Nachteil solcher Beschichtungen ist es, daß sie hohen mechanischen Belastungen nicht standhalten; insbesondere birgt das Befahren derartig beschichteter Bodenplatten die Gefahr, daß die Beschichtung schnell verschleißt und somit jeglicher Schutz für die darunter liegenden Holzwerkstoffe verloren geht. Hinzu kommt, daß die ansonsten optisch ansprechenden Holzoberflächen der Bodenplatten verdeckt werden. Zudem vermindert sich die Rutschhemmung derartiger Beschichtungen, obgleich vielfach mit kreisförmigen Vertiefungen versehen, relativ rasch.

Andererseits können infolge der hohen mechanischen Belastungen Beschichtungssysteme, namentlich solche, die eine hohe dekorative Wirkung aufweisen, aus anderen Anwendungen, z. B. im Sitzmöbelbau, nicht auf den vorliegenden Anwendungsfall übertragen werden.

Die Mängel an Abrieb- und Rutschfestigkeit sind also die hauptsächlichen Nachteile der Beschichtung nach dem Stand der Technik; aber auch den Forderungen nach ansprechender dekorativer Gestaltung konnte bislang nur sehr bedingt entsprochen werden. Die seit längerem angeregte farbliche Gestaltung der Außenschichten von mehrschichtigen Platten (DE G 89 04 124 U1) ist, da dauerhaft ohne erheblichen Aufwand nicht zu gewährleisten, gleichfalls bislang nicht möglich.

Aufgabe der Erfindung ist es, die Nachteile des Standes der Technik zu beseitigen. Insbesondere soll eine abrieb- und rutschfeste sowie zugleich dekorative Beschichtung für eine Ausbauplatte, die hohen mechanischen Belastungen ausgesetzt ist, vorgeschlagen werden.

Erfindungsgemäß wird diese Aufgabe durch die Merkmale des Anspruches 1 gelöst; zweckmäßige Ausgestaltungen der Erfindung können den Ansprüchen 2 bis 7 entnommen werden.

Nach Maßgabe der Erfindung ist vorgesehen, daß eine Holzwerkstoffplatte in grundsätzlich seit langem bekannter Ausführung, strukturiert wie vorstehend angegeben, hierbei aber auch bestehend aus mehreren zusammengepreßten Lagen, zwischen denen ein technisches Textil eingebracht sein kann, durch eine abriebfeste, dekorative Systemschicht belegt ist. Erfindungsgemäß besteht die Beschichtung aus einer oder mehreren separaten Schichten, nämlich aus mit Wärme härtbaren Harzen imprägnierten, unifarbenen oder oberflächige Applikationen aufweisenden Papieren, die entweder als kompaktes plattenförmiges Halbzeug (z. B. HPL), als kompakte Materialbahn von der Rolle (z. B. CPL) oder aus einzeln aufgelegten Blättern oder Schichten derart imprägnierter Papiere von der Rolle, die mit den phenolharzbeleimten Holzwerkstofflagen in einem Arbeitsgang verpreßt werden. Bei der Beschichtung kann es sich aber auch um kompakte Materialblätter oder den Abschnitt einer Materialbahn von der Rolle handeln, welche aus einem imprägnierten Dekorpapier mit Acrylatbeschichtung bestehen.

Alle diese Beschichtungen implizieren im Schichtenaufbau, verschleißmindernde Korund- oder ähnlich harte Partikel, des weiteren können sie rutschhemmende Prägestrukturen aufweisen.

Es hat sich gezeigt, daß mit einem solchen Systemaufbau eine kostengünstige, verschleißfeste und rutschfeste Beschichtung einer Bodenplatte möglich ist.

Dem Wesen der Erfindung folgend ist vorgesehen, daß die Applikation aus Prägungen oder Digitaldrucken, z. B. in Form von Bildern oder Schriftzügen bzw. auch aus Kombinationen von beiden, bestehen kann.

Die Beschichtung kann mit dem Holzwerkstoff direkt, wenn dieser auch an der Oberfläche phenolharzbeleimt ist, oder vermittels eines thermisch härtenden Klebefilms auf Phenolharzbasis verpreßt ist, der auch zur Verklebung der Schichten des Holzwerkstoffes selbst verwendet werden kann.

Die erfindungsgemäße Beschichtung kann mit den Schichten des Holzwerkstoffes, wenn dieser eine geschlossene Oberfläche aufweist auch ohne ihn zuvor zu schleifen, in einem Arbeitsgang verpreßt werden. Die Anwendung der Erfindung ist an keinen speziellen Verbund- oder Schichtaufbau geknüpft.

Die Erfindung wird nachfolgend anhand eines Ausführungsbeispiels näher beschrieben; hierzu zeigen
- Fig. 1: einen Querschnitt einer erfindungsgemäß beschichteten Ausbauplatte aus mehrlagigem Holzwerkstoff
- Fig. 2: die Draufsicht einer solchen Platte, ausgeführt als Bodenplatte.

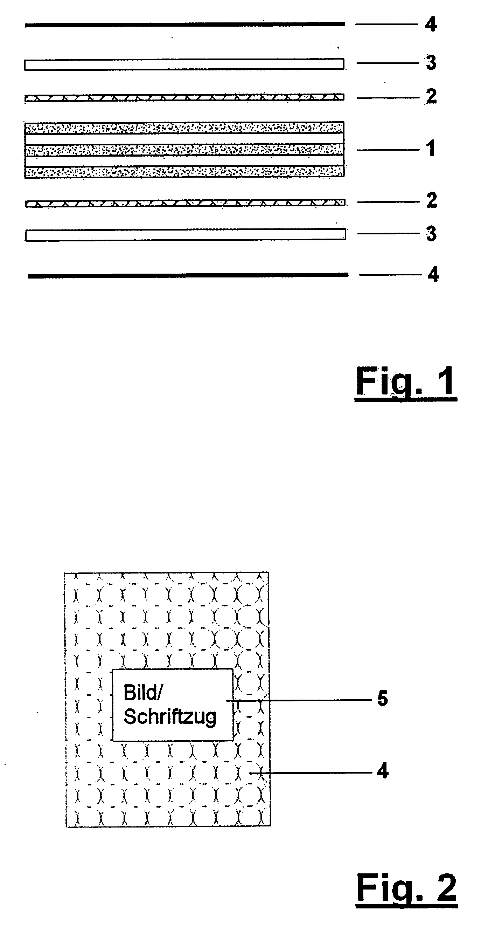

Fig. 1 zeigt eine Holzwerkstoffplatte, die aus einem Trägerwerkstoff 1 (Mittellage), einem darauf beidseitig aufgelegten phenolharzbeschichteten Textil 2, das die Armierung bildet, die mit den Decklagen 3 verbunden ist, auf denen das Beschichtungssystem 4 aufgebracht ist. Das oben beschriebene Beschichtungssystem entsteht beim Verpressen aus hochfesten imprägnierten Papieren, in der Korund zur Verbesserung der Abriebfestigkeit eingelagert ist; zudem weißt es eine spezielle Prägestruktur zur Verbesserung der Rutschhemmung auf.

Aus Fig. 2 ist das Beschichtungssystem 4 und die darin eingelagerte Applikation 5 in Form eines Bildes/Schriftzuges ersichtlich.

### Liste der verwendeten Bezugszeichen

- 1: Trägerwerkstoff
- 2: armierendes Textil
- 3: Decklage
- 4: Beschichtungssystem
- 5: Applikation; z. B. Bild und/oder Schriftzug

## Patentansprüche

1. Beschichtete Ausbauplatte aus mehrlagigem Holzwerkstoff, insbesondere für die Anwendung als Bodenplatte im Nutzfahrzeug- und Containerbau sowie als lastaufnehmendes Ausbauelement, **dadurch gekennzeichnet, daß** die Beschichtung aus mit Wärme härtbaren Harzen imprägnierten, unifarbenen oder oberflächige Applikationen (5) aufweisenden Papieren, die entweder als kompaktes plattenförmiges Halbzeug, z.B. HPL, als kompakte Materialbahn von der Rolle, z.B. CPL, oder aus einzeln aufgelegten Blättern oder Schichten derart imprägnierter Papiere von der Rolle ausgeführt ist, besteht, die mit den phenolharzbeleimten Holzwerkstofflagen in einem Arbeitsgang verpresst sind.

2. Beschichte Ausbauplatte nach Anspruch 1, **dadurch gekennzeichnet, daß** die Beschichtung aus einem kompakten plattenförmigen Halbzeug oder aus einer kompakten Materialbahn von der Rolle, z.B. ELESGO, besteht, die sich aus einem imprägnierten Dekorpapier, einer Akrylatharzschicht und gegebenenfalls einer zusätzlichen kratzbeständigen Überzugsschicht zusammensetzt.

3. Beschichtete Ausbauplatte nach Anspruch 1 und 2, **dadurch gekennzeichnet, daß** beidseitig eine Beschichtung, gegebenenfalls in verschiedenen Variationen, aufgebracht ist.

4. Beschichtete Ausbauplatte nach Anspruch 1 und 2, **dadurch gekennzeichnet, daß** eine oder mehrere Holzwerkstofflagen nicht beleimt sind und statt dessen thermisch härtende Klebefilmlagen auf Phenolharzbasis zwischen die Holzwerkstofflagen bzw. zwischen der äußersten Holzwerkstofflage (3) und die Beschichtung eingebracht sind.

5. Beschichtete Ausbauplatte nach Anspruch 1 und 2, **dadurch gekennzeichnet, daß** in den Schichtenaufbau der Beschichtung verschleißmindernde Partikel aus Korund oder ähnlich hartem Material eingebracht sind.

6. Beschichtete Ausbauplatte nach Anspruch 1, **dadurch gekennzeichnet, daß** die Applikationen (5) geprägte Bilder und/oder Schriftzüge sind.

7. Ausbauplatte nach Anspruch 1, **dadurch gekennzeichnet, daß** die Applikationen (5) Digitaldrucke in Bild- und/oder Schriftform sind.
